# EUROPÄISCHE PATENTSCHRIFT

(11) **EP 1 848 660 B1**
(45) Veröffentlichungstag und Bekanntmachung des Hinweises auf die Patenterteilung: **12.10.2016**
(21) Anmeldenummer: 06700956.3
(22) Anmeldetag: 23.01.2006
(51) Int. Cl.: C01B 3/26

(54) **VERFAHREN UND VORRICHTUNG ZUR HERSTELLUNG VON WASSERSTOFF**
PROCESS AND APPARATUS FOR THE PRODUCTION OF HYDROGEN
PROCÉDÉ ET DISPOSITIF POUR LA PRODUCTION D'HYDROGÈNE

(30) Priorität: 10.02.2005 EP 05450026
(43) Veröffentlichungstag der Anmeldung: 31.10.2007
(73) Patentinhaber: Bestrong International Limited, Hong Kong (CN)
(72) Erfinder: MAUTHNER, Klaus, A-9131 Grafenstein (AT); HAMMEL, Ernst, A-1140 Wien (AT)
(74) Vertreter: Sonn & Partner Patentanwälte
(86) Internationale Anmeldenummer: PCT/AT2006/000032
(87) Internationale Veröffentlichungsnummer: WO 2006/084295

(56) Entgegenhaltungen:
- EP-B1- 1 623 957
- JP-A- 2003 146 606
- JP-A- 2004 074 061
- US-A- 3 284 161
- US-A1- 2002 007 594
- US-A1- 2004 253 168
- MURADOV N: "Hydrogen via methane decomposition: an application for decarbonization of fossil fuels" INTERNATIONAL JOURNAL OF HYDROGEN ENERGY, ELSEVIER SCIENCE PUBLISHERS B.V., BARKING, GB, Bd. 26, Nr. 11, November 2001 (2001-11), Seiten 1165-1175, XP004306166 ISSN: 0360-3199
- AIELLO R ET AL: "Hydrogen production via the direct cracking of methane over Ni/SiO2: catalyst deactivation and regeneration" APPLIED CATALYSIS A: GENERAL, ELSEVIER SCIENCE, AMSTERDAM, NL, Bd. 192, Nr. 2, 14. Februar 2000 (2000-02-14), Seiten 227-234, XP004272158 ISSN: 0926-860X

## Beschreibung

Die vorliegende Erfindung betrifft ein Verfahren zur Herstellung eines wasserstoffhältigen Gasgemisches aus einem geeigneten kohlenwasserstoffhältigen Feedgas in einem Reformer.

Beschrieben werden Verfahrensverbesserungen zur katalytischen Spaltung von Kohlenwasserstoffen in Wasserstoff und festen Kohlenstoff, mit dem Grundgedanken die CO₂-Abgabe an die Umwelt zu minimieren bzw. zu vermeiden. Sie beschreibt auch Verbesserungen bezüglich wirtschaftlicher Prozessführung, zusätzlich ist auch dem Einsatz von Biomasse und daraus resultierenden Material Rechnung getragen, welche als potentielle Rohstoffquelle für Kohlenwasserstoff erachtet werden. Dies ist auch ein Beitrag zur wirtschaftlich, umweltfreundlichen Nutzung von Wasserstoffenergieszenarien.

Wasserstoff, ein farb- und geruchloses Gas, nahezu unlöslich in Wasser, wurde 1766 vom englischen Wissenschaftler Henry Cavendish entdeckt. Im Labor wird es durch Elektrolyse von Wasser, oder durch Einwirkung von verdünnten Säuren auf Zink oder Eisen hergestellt. Industriell wird es durch Zweistufenverfahren hergestellt, wobei in der ersten durch Verbrennung von Kohlenwasserstoffen mit Wasserdampf CO und H₂ erzeugt wird, und in der zweiten Stufe CO durch die Wassergasreaktion (CO + H₂O -> CO₂ + H₂) zu CO₂ konvertiert wird. Kohlendioxid wird dann durch Wäsche entfernt.

Das Interesse an Wasserstoff als Energieträger wuchs in den frühen 70igern, während der ersten Ölkrise, als Wissenschaftler Szenarien bezüglich der Rolle von Wasserstoff entwickelten. Während der 80er Jahre wurden große Anstrengungen unternommen neue Technologien bezüglich erneuerbarer Energieträger und Wasserstoff zu entwickeln, mit dem Ziel die Abhängigkeit von fossilen Energieträgern zu vermindern oder überhaupt davon abzukommen (National Renewable Energy Laboratory, 1995).

Heutigem Wissen zufolge wird Wasserstoff das Potenzial eines zukünftigen Energieträgers zugeschrieben, welcher weitgehend von konventionellen Ressourcen unabhängig ist. Schlüsseltechnologien dafür sind sowohl die Wasserstoffproduktion, dessen Speicherung, Transport und Umwandlung in Energie.

Schätzungen der IEA zufolge, stammen 95% der heutigen weltweiten Wasserstoffproduktion aus kohlenstoffhaltigen Rohmaterialien, zumeist fossilen Ursprungs. Die meisten konventionellen Prozesse konvertieren besagten Kohlenstoff zu CO₂, welcher in die Atmosphäre entweicht. Das Wissen um den Einfluss von Treibhausgasen auf globale Klimaveränderungen bedingt nun diese konventionellen Ansätze neu zu überdenken. Auch darf davon ausgegangen werden, dass die Untertagslagerung von gesammeltem CO₂, soweit gekoppelt an herkömmliche Steam-Reforming-Prozesse, nicht so schnell zur absolut sauberen Herstellung von Wasserstoff aus fossilen Energieträgern führen wird.

Grundsätzlich stehen zur Herstellung von Wasserstoff aus Kohlenwasserstoffen zwei Wege offen; nämlich die oxidierende und nicht-oxidierende Umwandlung.

Das Steam-Reforming von Erdgas (in erster Linie Methan), auch als SMR bezeichnet, ist ein sehr weit entwickelter und kommerziell umgesetzter Prozess, womit 48% der weltweiten Wasserstoffproduktion bewerkstelligt werden. Diese Technologie ist auch mit anderen Rohstoffen wie Ethan oder Naphtha machbar, jedoch ist die Effizienz mit solch höhermolekularen Stoffen geringer (C.E. Gregoire Padró and V. Putsche, "Survey of the Economics of Hydrogen Technologies", September 1999, National Renewable Energy Laboratory). Die SMR-Technologie fußt auf der Reaktion von Methan mit Wasserdampf in Gegenwart eines Katalysators. Industriell gesehen, läuft der Prozess bei ca. 800°C und einem Druck von 2,5 MPa. Die erste Prozessstufe umfasst die Konversion von Methan mit Wasserdampf zu CO und Wasserstoff. In der zweiten Stufe, auch als Wasser-Gas-Reaktion bezeichnet, wird CO weiter mit Wasserdampf umgesetzt und liefert CO₂ und weiteren Wasserstoff. Obwohl derartig hergestellter Wasserstoff einen größeren Energieinhalt als Methan aufweist, ist durch den produktionsbedingten Energieaufwand seine effektive Energieausbeute auf 65% begrenzt. Das anfallende CO₂ wird mittels Membranen von Produktgas abgetrennt, welches in weiteren Prozessschritten von anderen Verunreinigungen befreit wird. Dieses in diesen Schritten anfallende Gas, welches immerhin zu 60% aus brennbaren Bestandteilen besteht, wird in den Reformer rückgeführt.

Unter Bezugnahme auf das Kyoto-Abkommen und verschiedene nationale Legislaturen, welche das Ziel verfolgen Treibhausgase zu minimieren, ist der größte Nachteil des SMR Verfahrens sein hoher CO₂₋Ausstoß. Diesen zu verhindern, ist ein zentraler Punkt der gegenständlichen Erfindung. Überdies gibt der hier beschriebene Prozess die wirtschaftliche Umwandlung von Kohlenwasserstoff in Wasserstoffgas und zusätzlich verwertbaren faserförmigen Kohlenstoff an.

Nicht-oxidierende Verfahren umfassen thermische Zersetzung, auch als Temperatur induzierte Dissoziation bezeichnet, Pyrolyse oder Cracken von Kohlenwasserstoffen zu Wasserstoff und Kohlenstoff.

Thermische Zersetzung von Erdgas wird seit langem durchgeführt und ist eines der wichtigsten Verfahren der Rußproduktion. In diesem Zusammenhang wird Erdgas bei hoher Temperatur im Bereich von 1200 bis 1800°C zu Wasserstoff und Ruß zersetzt, wobei vorzugsweise Luft, Sauerstoff oder Wasserdampf zugemischt wird, um sowohl den gebildeten Ruß zu modifizierten als auch die Reaktortemperatur aufrecht zu erhalten. Allgemeines Schrifttum zu diesem Thema ist aus der Monographie, Winnacker-Küchler, Bd. 3, anorganische Technologie II, 4. Ausgabe, Carl Hanser Verlag, 1983, zu entnehmen. Eine Neuentwicklung betreffend Methanzersetzung wurde kürzlich von der norwegischen Fa. Kvaemer vorgestellt, wobei Wasserstoff und Ruß in einem Hochtemperaturplasma hergestellt werden (CB&H Prozess, Proc. 12th World Hydrogen Energy Conference, Buenos Aires, 697, 1998). Vorteile dieses plasma-chemischen Prozesses sind hohe thermische Effizienz (> 90%) und Reinheit des hergestellten Wasserstoffes (98 Vol.%). Allerdings ist es ein sehr energieintensiver Prozess.

Um die hohen Reaktionstemperaturen zu vermindern, wurden katalysatorunterstützte Prozesse vorgeschlagen. Dabei stellte sich heraus, dass Übergangsmetalle hohe Aktivität bezüglich der Zersetzung von Methan zeigen. Allerdings mit dem Nachteil, dass sich Kohlenstoffschichten auf der Katalysatoroberfläche ablagern. Zumeist wurde der so gebildete Kohlenstoffbelag unter Luftzutritt abgebrannt um den Katalysator zu regenerieren, was wiederum zur Folge hat, dass der gesamte Kohlenstoff zu CO₂ konvertiert wird und Wasserstoff das alleinige verwertbare Produkt ist.

Die US 1 868 921, Schmidt et al., berichtet über die Umwandlung ungesättigter Kohlenwasserstoffe, vorzugsweise Ethylen, zu Ruß mittels auf Kieselgur oder ZnO aufgebrachten Nickel- bzw. Kobalt-Katalysatoren bei Temperaturen um 600°C, erwähnt jedoch in keiner Weise nennenswerte Synthese von Wasserstoff. Das US-Patent 2 760 847, Oblad et al., behandelt die Zersetzung niedermolekularer Kohlenwasserstoffe zur Erzeugung von Wasserstoff durch Kontaktreaktion an Übergangsmetallen der Gruppen VI/b und VIII des Periodensystems der Elemente, welche in flüssiger Wirtsmetallphase dispergiert sind. Das US Patent 3 284 161, Pohlenz et al., beschreibt einen Prozess zur kontinuierlichen Herstellung von Wasserstoff mittels katalytischer Zersetzung gasförmiger Kohlenwasserstoffe. Methan wird in einer Katalysatorwirbelschicht bei Temperaturen zwischen 815 und 1093°C zerlegt. Auf Träger abgeschiedene Ni-, Fe- und Co-Katalysatoren, vorzugsweise Ni/Al₂O₃, werden in diesem Prozess eingesetzt. Der mit Kohlenstoff belegte Katalysator wird kontinuierlich dem Reaktor entnommen und der Kohlenstoff in einem Regenerator abgebrannt, worauf der wiedergewonnene Katalysator in den Reaktor rückgeführt wird.

Ermakova et al. untersuchte den Effekt des SiO₂-Gehalts auf Ni- und Fe-Katalysatoren zur Synthese von Kohlenstoff-Filamenten, wobei auch die Effizienz dieser Katalysatoren zur Darstellung von Wasserstoff vorgeschlagen wird [Ermakova et al., Catalysis Today, 77, (2002), 225-235]. Die Autoren berichten von Ni- und Fe-SiO₂₋Katalysatoren, welche einen Metallgehalt zwischen 85 und 90 Gew.% aufweisen und Methan effektiv in Kohlenstoff-Filamente und Wasserstoff zerlegen. Die Katalysatorherstellung umfasst ein zweistufiges Verfahren, wobei α-Ni(OH)₂ mit großer spezifischer Oberfläche in ein SiO₂-hältiges AlkoSol eindispergiert wird und die daraus resultierende Mischung bei Temperaturen bis zu 700°C calziniert wird. Obwohl der bei 700°C reduzierte Katalysator die niedrigste spezifische Oberfläche aufwies (7 m²/g) zeigte er die höchste katalytische Aktivität. Zum Vergleich ergab der bei 250°C calzinierte Katalysator nach BET eine spezifische Oberfläche von 400 m²/g. Testversuche, wobei Methan katalytisch zersetzt wurde, ergaben, dass Methan mit 10 mg Katalysator zu 16% zersetzt werden kann. Bei einer Reaktionstemperatur von 550°C und einem Volumenstrom von 20 mL/min Methan wurde die Katalysator-Lebensdauer mit 30 Stunden angegeben.

In der US 6 315 977 B wird ein Verfahren zur Wasserstoffund Nanotube-Produktion beschrieben, bei dem ein Kohlenwasserstoffgas an einem Reaktor mit zwei unterschiedlichen Zonen reagiert, wobei sich die Zonen in Temperatur und Katalysatorzusammensetzung unterscheiden.

Die JP 2003-146 606 A beschreibt ein Verfahren zur Wasserstoffproduktion, bei dem Kohlenwasserstoffe an Kohlenstoffnanohörnern zu Wasserstoff und Kohlenstoff zerfallen.

Aus der JP 2003-236 377 A geht ein Wasser-Gas-Shift-Reaktions-Katalysator hervor, der aus einem Titan-Nanotube besteht. Ein solcher Katalysator kann zur Reduzierung von NOₓ aus Abgasen verwendet werden.

Ein weiterer Katalysator zur Wasserstoffproduktion wird in der JP 2004-074 061 A beschrieben. Dieser Katalysator besteht aus einem Träger auf Silica-Titan-Kohlenfaser- bzw. -Kohlenstoffnanofaser-Basis, die mit Palladium und Nickel-Verbindungen imprägniert wird.

Ein Kupferkatalysator mit einem Nanokohlenstoffmaterial zur Wasserstoffgewinnung aus Methanol geht aus der CN 1 586 718 A hervor.

Die US 2004/253168 A1 beschreibt ein System und Verfahren zur Verarbeitung von Kohlenwasserstoffen. Submicron-Kohlenstoff-Strukturen und Graphit-Filamente wurden in jüngster Zeit breit untersucht. Auf Grund ihrer vielen besonderen Eigenschaften werden solche Materialien als funktionelle Komponente in neuartigen Werkstoffen und Funktionsteilen vorgeschlagen. Derartige synthetische Graphitstrukturen übertreffen derzeit in Anwendung befindliche vergleichbare Materialien in Bezug auf mechanische, elektrische und chemische Eigenschaften; so z.B. spezifischer elektrischer Widerstand: 10⁻⁴ Ωcm, maximale Stromtragfähigkeit: 10¹³ A/cm², thermische Leitfähigkeit: 2000 W/mK, E-Modul: 1 TPa, Zugfestigkeit: 30 GPa.

Potentielle Anwendungen für solche Materialien sind grundsätzlich weit gestreut, beginnend mit der Fähigkeit Wasserstoff zu speichern sind sie weiters einsetzbar als Komponente in Verbundwerkstoffen, als SuperCap-Material, als Speichermedium in Li-Ionen-Akkumulatoren, in Feldemissionsdisplays, in PEM-Brennstoffzellen, in der Elektronik und als aktive Komponente in Aktuatoren. Aktuell, mit Zielrichtung produktorientierte Entwicklung, sind Polymer-, Metall-Matrix- und Kohlenstoff-Kohlenstoff-Verbundwerkstoffe, Feldemissionskathoden, Elektroden und Membrane für Brennstoffzellen-Anwendungen hervorzuheben. Um solche Entwicklungen jedoch erst zu ermöglichen, ist es notwendig Produktionsmittel und Syntheseprozesse bereitzustellen, welche auch die Herstellung großer Mengen zu marktgängigen Preisen erlauben. Es ist daher leicht verständlich, dass die Einsatzstoffe leicht und in ausreichender Menge, innerhalb von geforderten Spezifikationsgrenzen, verfügbar sein und die einzelnen Syntheseschritte weitgehend automatisiert ablaufen müssen.

Nachdem mittlerweile etwas mehr als 30 Jahre verstärkt daran geforscht wurde, wie synthetische Graphit-Fasern mit weniger als 1 µm Durchmesser, jedoch weit über 1 µm Länge entstehen, wurde eine beträchtliche Anzahl von Veröffentlichungen geschrieben, welche nunmehr doch etwas Einblick in dieses noch immer nicht ganz geklärte Phänomen bringen. Es haben sich zumindest ein paar allgemein akzeptierte Basisfakten zu diesem Thema ergeben:
- Als Katalysatoren geeignet sind die Übergangselemente der VIII-Gruppe des PSE, Fe, Ni und Co, welche in der Lage sind, in bestimmten Temperaturbereichen metastabile Me₃C Zementitphasen in Gegenwart von Kohlenstoff zu bilden. Obwohl gewisse kinetische Stabilität vorliegt, sind solche Me-C Systeme thermodynamisch nur dann im Gleichgewicht, wenn Metall und Graphit als getrennte Phasen vorliegen.
- Die Kohlenstoff liefernde Spezies muss zumindest in einem gegebenen Zeitintervall eine stabile Dampf- bzw. Gasphase bilden.
- Der Durchmesser der katalytisch gebildeten Fasern oder Whisker steht im direkten Zusammenhang mit der Größe der Katalysatorpartikel.
Vom akademischen Standpunkt aus wurde schon in den frühen 50iger Jahren auf dem Gebiet der Whiskertechnologie geforscht. Dabei wurden in erster Linie Metall-, Metalloxid-, Metallcarbid- und Carbonwhiskers untersucht. Da jedoch keine größeren Mengen synthetisiert werden konnten, ist kaum Datenmaterial bezüglich Produkte und Materialien mit solchen Kohlenstoff-Filamenten verfügbar. Andererseits war man mit der Entwicklung und Verarbeitung von schon kommerziell erhältlichen Pitch- und PAN-Kohlefasern beschäftigt. Nichtsdestoweniger wurde schon zu dieser Zeit das Potential der hier angesprochenen Materialklasse erkannt und schon vor 1980 in wissenschaftlichen Publikationen diskutiert.

Eine Schlüsselpublikation, welche röhrenförmige Graphit-Filamente zum zentralen Thema hat, wurde von Bacon 1960 veröffentlicht [Bacon, R. J. Appl. Phys. 1960, 31, 285.]. Diese Arbeit und darin weiterleitende Literatur beschreibt die Chemie und Wachstumsbedingungen von Graphitwhiskern, sowohl durch Katalysatoren als auch im elektrischen Lichtbogen. Letztere Variante ermöglichte die Entdeckung der Fullerene. Messungen an einzelnen Graphitwhiskern, welche außerordentlich hohe E-Moduli und sowohl elektrische als auch thermische Leitfähigkeiten ergaben, legten nahe, diese als Verstärkung in Verbundwerkstoffen und elektrisch leitende Komponente in intelligenten Kunststoffen einzusetzen.

Aufgabe der vorliegenden Erfindung ist es nun, ein Verfahren zur Herstellung eines wasserstoffhältigen Gasgemisches aus einem geeigneten kohlenwasserstoffhältigen Feedgas in einem Reformer vorzusehen, wobei einerseits die Bildung von möglichst reinem Wasserstoff mit geringem CO₂-Anteil und andererseits ein kostengünstiges Verfahren zur Herstellung von Nanokohlenstoff ermöglicht wird.

Diese Aufgabe wird erfindungsgemäß dadurch gelöst, dass zumindest ein Teil des Feedgases vor Eintritt in den Reformer abgezweigt und mindestens einem Sekundärreformer zugeführt wird, wobei das Feedgas im Sekundärreformer mit einem nanostrukturierten Katalysator kontaktiert wird und die im Wesentlichen CO-und CO₂-freien Abgase des Sekundärreformers entweder mit dem aus dem Reformer austretenden wasserstoffhältigen Gasgemisch kombiniert oder in den Reformer eingebracht werden. Dabei wird erfindungsgemäß im Sekundärreformer, neben dem sekundär am Katalysator abgeschiedenen Nanokohlenstoff, ein mit Wasserstoff angereichertes Gas produziert, welches durch katalytische Zersetzung des Feedgases einen Wasserstoffgehalt zwischen 5 und 99,99999 Vol.% und einen CO- und CO₂-Gehalt < 1 Vol.% aufweist. Gasströme mit einem Wasserstoffgehalt größer oder um 80 Vol.% können direkt einer weiteren Gasreinigung unterworfen werden, wobei am Ende reiner Wasserstoff erhalten wird. Bei geringeren H₂ Konzentrationen, < 80 Vol.%, ist vorgesehen, das Abgas des Sekundärreformers in den Reformer einzuspeisen. Daraus sich offensichtlich ergebende Vorteile sind: i.) verminderte Belegung des Reformerkatalysators mit inhibitierenden Kohlenstoffbelägen durch u. a. geringere eingebrachte Kohlenstoffmengen; ii.) durch die hohe Wärmekapazität von Wasserstoff werden beträchtliche Wärmemengen aus dem Sekundärreformer in den Reformer mitgenommen, woraus ein energetisch günstigerer Betrieb des Reformers resultiert; iii.) der CO₂-Gehalt des nach diesem Prozess erhaltenen Synthese-Gases ist beträchtlich vermindert. Das am Ende anfallende CO₂ wird jedoch als wertvoller Reaktant, neben anderen möglichen reaktiven Substanzen, zur Oxidation bzw. Oberflächenmodifizierung des im Sekundärreformer katalytisch erzeugten Nanokohlenstoffes benötigt und somit nutzbringend verwertet. Die oxidierende Nachbehandlung des Nanokohlenstoffes wird bei Temperaturen zwischen 300 und 2000°C bewerkstelligt. Wird diese Oxidationsbehandlung bei einer Temperatur gleich oder größer 500°C durchgeführt, wird CO₂ substantiell in CO umgewandelt, welches wiederum in den gegebenenfalls dem Reformer nachgeschalteten Shift-Reaktor eingespeist, positiv zur Mengenausbeute bezogen auf Wasserstoff beiträgt. Zusätzliche CO-Einspeisung in den Shift-Reaktor wirkt sich überdies positiv auf den Energiehaushalt dieser Komponente aus, da die Wassergasreaktion (CO + H₂O = CO₂ + H₂) bekannterweise sehr exotherm ist. Der erfindungsgemäß verwendete nanostrukturierte Katalysator kann dabei z.B. auch in Form eines gepressten Pellets vorliegen, welches ausreichende Porosität aufweist, so dass die gesamte aktive Oberfläche des Katalysators dem eintretenden Feedgas zur Verfügung steht.

Vorzugsweise werden erfindungsgemäß die Abgase des Sekundärreformers vor Eintritt in den Reformer vorgewärmt, was unter anderem durch die hohe Wärmekapazität des schon vorhandenen Wasserstoffs leicht erzielt und weiters durch Mitnahme beträchtlicher Wärmemengen aus dem Sekundärreformer bewerkstelligt wird, woraus ein energetisch günstigerer Betrieb des Reformers resultiert.

Gemäß einer weiteren Ausführungsform der vorliegenden Erfindung werden die Abgase des Reformers zur Entfernung von Kohlenmonoxid nachverbrannt. Da die Abgase des Sekundärreformers erfindungsgemäß mit den Abgasen des Reformers kombiniert werden, geschieht dies kostengünstig und mit geringem Energieaufwand in einem Shift-Reaktor, der einem Reformer ohnehin zumeist nachgeordnet ist. Weiters kann das aus dem Shift-Reaktor austretende CO₂-hältige Abgas zur Oxidation bzw. Oberflächenmodifizierung von Nano-Kohlenstoff verwendet werden. Beispielsweise kann der mit Nano-Kohlenstoff bedeckte verbrauchte Katalysator in einem Nachreaktor gesammelt und dort einer Oxidation bzw. Oberflächenmodifizierung unterworfen werden, ebenso ist möglich bei Vorsehung mehrerer Sekundärreformer zwischen diesen hin und her zu schalten und in den jeweils mit Nano-Kohlenstoff beladenen Sekundärreformern die Oxidation bzw. Oberflächenmodifizierung vorzunehmen.

Günstig ist auch, wenn die Abgase des Sekundärreformers mit dem aus dem Reformer austretenden wasserstoffhältigen Gasgemisch kombiniert und vor der Nachverbrennung abgekühlt werden, um die Rückreaktion der Wassergasreaktion zu vermeiden. Die vorliegende höhere Wasserstoffkonzentration, welche auf Grund des Sekundärreformers erreicht wird, gestattet auch eine Verbesserung der Wärmeabfuhr der aus der Wassergasreaktion freiwerdenden Wärme. Gleichzeitig kann durch die Abkühlung, welche vorzugsweise in einem Wärmetauscher stattfindet, auch der für den Reformer benötigte Wasserdampf erzeugt bzw. erhitzt werden.

Weiters wird bevorzugt, wenn der nanostrukturierte Katalysator auf einem Träger angeordnet ist. Es ist soweit bekannt, dass nanostrukturierte Katalysatoren, wenn auf inerte Materialien, wie SiO₂, MgO, Al₂O₃, SiC, Graphit etc. aufgebracht, die Fähigkeit besitzen, unter Temperatureinwirkung dünnste Kohlenstoff-Fasern katalytisch zu erzeugen. Hingegen offenbart die gegenständliche Erfindung einige zusätzliche Neuerungen bezogen auf deren duale Effizienz, sowohl Wasserstoff als auch Nanokohlenstoff effizient zu erzeugen, was der frei zugänglichen Literatur nicht zu entnehmen ist.

Gemäß noch einer weiteren Ausführungsform der vorliegenden Erfindung ist der Träger ein flächiger Träger, wodurch in einfacher Weise die gesamte katalytisch aktive Oberfläche des Katalysatormaterials genutzt wird.

Bevorzugt wird, wenn der Träger partikelförmige keramische Körper oder partikelförmige Glaskörper umfasst, welche einerseits eine größere Oberfläche aufweisen als flächige Träger und andererseits auch in Wirbelschichten eingesetzt werden können. Weiters weisen partikelförmige Träger auch eine höhere mechanische Stabilität auf.

Weiters ist günstig, wenn im Sekundärreformer der nanostrukturierte Katalysator kontinuierlich ein- und ausgeschleust wird. Dadurch kann ein kontinuierlicher Betrieb des Sekundärreaktors gewährleistet werden und gleichzeitig können der am nanostrukturierten Katalysator abgeschiedene Nanokohlenstoff kontinuierlich abgetrennt und der weiteren Verwendung zugeführt werden.

Vorzugsweise werden der nanostrukturierte Katalysator und das Feedgas im Sekundärreformer im Gleichstrom geführt. Mittels dieser Führung wird eine höhere Verweilzeit des Feedgases am Katalysator erreicht, dadurch ergeben sich eine bessere Gasausnutzung und höhere Konversionsraten.

Gemäß noch einer weiteren Ausführungsform der vorliegenden Erfindung werden der nanostrukturierte Katalysator und das Feedgas im Sekundärreformer im Gegenstrom geführt. Dadurch wird der Katalysator schneller reduziert und erreicht dadurch eine höhere Effizienz.

Weiters wird bevorzugt, das Feedgas im Sekundärreformer bei einer Temperatur im Bereich von 300°C bis 1400°C mit dem nanostrukturierten Katalysator zu kontaktieren. Durch Auswahl der geeigneten Temperatur können Wachstum und Struktur des Nanokohlenstoffs beeinflusst bzw. sogar gesteuert werden.

Gemäß noch einer weiteren Ausführungsform der vorliegenden Erfindung wird das Feedgas im Sekundärreformer bei einer Temperatur im Bereich von 400°C bis 700°C mit dem nanostrukturierten Katalysator kontaktiert. Bei diesem Temperaturbereich weisen erfindungsgemäß bevorzugt eingesetzte Ni-Composite-Katalysatoren sehr hohe Effizienz auf.

Vorzugsweise wird der Katalysator ausgewählt aus der Gruppe bestehend aus Gruppe VIII-Übergangselementen. Diese Katalysatoren sind an sich für die Herstellung von Nano-Kohlenstoff bekannt.

Günstig ist es auch, wenn der Katalysator ein Composite-Katalysator umfassend ein Mitglied ausgewählt aus der Gruppe bestehend aus Erdalkalimetalloxiden, Silizium, Siliziumoxid und Mischungen hiervon ist. Solche Katalysatoren sind besonders für Filamentherstellung geeignet, da die Inertkomponente im Inneren des Katalysatorpartikels einen Konzentrationsgradienten bezüglich des im Metall metastabil gelösten Kohlenstoffs bewirkt.

Bevorzugt wird, wenn als Katalysator Nickel und/oder Eisen zum Einsatz kommen. Die erfindungsgemäß bevorzugt zum Einsatz kommenden Katalysatoren basieren auf Ni, Fe und NiFe und weisen dabei noch bevorzugter Composite-Charakter auf, mit einer gegenüber der Kohlenwasserstoffzersetzung inerten Komponente. Bezogen auf die Reaktionstemperatur ist mit den hier angegebenen Katalysatoren, je nach Zusammensetzung, ein Wirkungsbereich von 300 bis 1400°C abgedeckt. Erfindungsgemäß wird mit dem Verfahren die größte Effizienz mit Methan als Kohlenwasserstoff erzielt. Dies auch mit dem Hintergrund, als dass Methan das günstigste C/H-Verhältnis aufweist und obendrein in ausreichender Menge aus biologischen Prozessen heraus gewonnen werden kann und die Unabhängigkeit von Kohlenwasserstoffen fossilen Ursprungs gewährleistet ist. Ohne auf eine Theorie festgelegt zu sein, lassen sich die Katalysatoren in ihrer Grundstruktur in einfacher Weise auch für andere Kohlenwasserstoffe spezifisch effizient gestalten. Somit sind auch höhere Kohlenwasserstoffe der Alkane, Alkene, Alkine, cyklische Kohlenwasserstoffe und deren thermische Zersetzungsprodukte, sofern sie in der Dampf- bzw. Gasphase unter den angegebenen Reaktionstemperaturen existent sind, durchaus geeignet den katalytischen Zersetzungsprozess zu durchlaufen. Wird auf den Reinheitsgrad des so produzierten Wasserstoffes kein so großer Anspruch gelegt, können in diesem Verfahren auch Kohlenwasserstoffgase mit Verunreinigungen, wie Stickstoff, Sauerstoff oder Schwefel, über den Sekundärreformer verarbeitet werden. Die Verunreinigungen können sowohl in der Luft als auch im Kohlenwasserstoff eingebunden (z.B. als Bestandteil einer funktionellen Gruppe) sein. Somit lassen sich akzeptierbare Grenzkonzentrationen des Zersetzungsgases, welches den Sekundärreformer verlässt, in weiten Bereichen einstellen. Zum Einen wird dies durch die Zusammensetzung des Feedgases, zum Anderen durch die Komposition des/der Katalysator-s/-en erreicht. Wie unschwer zu verstehen, liegt der Schlüssel in der Chemie Nanokohlenstoff mittels ausreichend katalytisch aktiver Katalysatoren herzustellen. Die Darstellung solcher Partikel, speziell im Hinblick auf Kontrolle der durchschnittlichen Durchmesserverteilung, wird durch Fällung von Ni, Fe, Co, oder beliebigen Mischungen davon aus wässriger Lösung unter Einstellung alkalischer Bedingungen erreicht. Damit werden Hydroxyd-Niederschläge, welche sehr große spezifische Oberflächen bilden und damit Voraussetzung für deren Nanostruktur sind, erhalten. Basische Reagenzien welche zur Einstellung von pH-Werten größer/gleich 8 Verwendung finden, sind sowohl Alkalihydroxide, Erdalkalihydroxide, Ammoniak oder Ammoniumhydroxid. Verwendet man Alkalihydroxide muss darauf geachtet werden, dass der fertige Katalysator keine Alkalimetallverunreinigungen mehr aufweist, da diese die Aktivität des Katalysators beeinträchtigen würden. Anders ist der Sachverhalt, wenn mit Erdalkalihydroxid bzw. Erdalkalioxid gefällt wird, da Erdalkalioxid sich im Composite-Katalysator als inerte Zusatzkomponente positiv auf seine katalytische Aktivität auswirkt. Es ist allein darauf zu achten, dass der Gehalt an Erdalkalioxid 50 Gew.% nicht übersteigt, wobei jedoch vorzugsweise Gehalte von weiniger als 20 Gew.% anzustreben sind. Demzufolge sind Composite-Katalysatoren mit MgO, CaO, MgO/CaO u. a. als Inertkomponente einfach zugänglich.

Gemäß noch einer weiteren Ausführungsform der vorliegenden Erfindung wird der Katalysator im Sekundärreformer kontinuierlich oder diskontinuierlich ausgeschleust, gegebenenfalls in Abhängigkeit vom Wasserstoffgehalt im Abgas, und von anhaftenden Kohlenstoffverbindungen abgetrennt. Nach Abtrennung des Nano-Kohlenstoffs wird der ausgeschleuste Katalysator dann kontinuierlich regeneriert bzw. recycliert und kann neuerlich eingesetzt werden. Dieser Verfahrensschritt kann besonders bevorzugt automatisiert ablaufen.

Vorzugsweise wird dabei der Katalysator mechanisch von anhaftenden Kohlenstoffverbindungen abgetrennt, vorzugsweise durch Abschaben oder in einem Zyklon. Dies ist insbesondere bei Verwendung eines flächigen bzw. festen Trägers vorteilhaft.

Weiters wird bevorzugt, wenn der Katalysator chemisch von anhaftenden Kohlenstoffverbindungen abgetrennt wird, vorzugsweise durch ein Ätzverfahren. Durch z.B. ein Ätzverfahren (Säurebehandlung) können die metallischen Katalysatoren auf einfache Weise abgetrennt und recycliert werden.

Günstig ist es auch, wenn der Katalysator physikalisch von anhaftenden Kohlenstoffverbindungen abgetrennt wird, vorzugsweise durch Hochtemperaturbehandlung, Abheizen, Induktiv, durch RF oder HF. Dieses Abtrennverfahren ist für die gebildeten Nano-Kohlenstoffe besonders schonend.

Gemäß noch einer weiteren Ausführungsform der vorliegenden Erfindung kommt als Feedgas Erdgas zum Einsatz. Erdgas stellt die billigste und am leichtesten zugängliche Variante eines Feedgases dar, gegebenenfalls wird es vor dem Einsatz von Schwefelverbindungen gereinigt.

Besonders bevorzugt wird, wenn als Feedgas ein gegebenenfalls vorgereinigtes Biogas zum Einsatz kommt. Dieses ist in seiner Zusammensetzung dem Erdgas sehr nahe und erlaubt eine Abkopplung von fossilen Energieträgern.

Vorzugsweise wird ein Teil des Feedgases als Heizgas zum Beheizen des Reformers und/oder Sekundärreformers verwendet. Dadurch kann die Energiebilanz günstig beeinflusst werden, speziell wenn als Feedgas ein gegebenenfalls vorgereinigtes Biogas zum Einsatz kommt und in ausreichenden Mengen zur Verfügung steht.

Dem hier Angeführten folgend sollte es hinlänglich klar sein, dass die hier angegebene Prozessabfolge einen wichtigen Schritt zur Verbesserung der Wasserstoffproduktion aus Kohlenwasserstoffen darstellt. Angenommen es wird Methan am Ni-Kontakt bei 600°C zersetzt, erhält man ein heißes, mit Wasserstoff angereichertes Gasgemisch der Zusammensetzung 33,33 Vol.% Methan und 66,66 Vol.% H₂. Dieses wird nun in den Reformer eingespeist, wo die verbleibenden 33,33 Vol.% CH₄ mit Wasserdampf in Gegenwart eines Ni-Katalysators zu CO und H₂ umgesetzt werden. In Zahlen gefasst ergibt sich eine Reduktion der CO₂-Emission um 50% bezogen auf das eingesetzte Methan.

Der erfindungsgemäß bevorzugt verwendete Composite-Katalysator kann wie folgt hergestellt werden:
Wie literaturbekannt, übt SiO₂ einen sehr positiven Einfluss auf die Aktivität von Übergangsmetallen der VIII. Gruppe aus. Zentraler Punkt ist auch bei diesen Katalysatoren, dass, ausgehend von in-situ erzeugten Metallhydroxid-Niederschlägen, entweder durch Parallelfällung oder unmittelbar darauf folgende Fällung das "Si" oder SiO₂ ebenso nanostrukturiert mit dem Hydroxid vereinigt wird.

Erfindungsgemäß werden SiO₂-hältige Ni- und Fe-Katalysatoren bzw. Ni-, Fe- und Ni/Fe-hältige Hydroxid- oder Oxid-Pulver entweder durch Fällung von SiO₂ "auf" das Metallhydroxid, welches in Wasser, Alkohol, Aceton oder anderen geeigneten Lösungsmitteln dispergiert ist, erhalten. SiO₂ wird durch die Zersetzung von Tetraoxysilan (TEOS) durch Basenzugabe (z. B. NH₃/H₂O) direkt auf das Hydroxid abgeschieden. In weiterer Ausgestaltung der Erfindung werden substöchiometrische SiO₂-Ni(OH)₂, SiO₂-Fe(OH)₃ oder SiO₂-Ni/Fe-Hydroxide durch direkte, einhergehende Fällung mit Basezusatz in einem Schritt erhalten. Auch in diesem Fall sei festgehalten, dass die Hauptkomponente des Composite-Katalysators das Gruppe VIII Übergangsmetall darstellt, wobei dieses zumindest in einem Verhältnis von größer als 50 mol% vorliegt, bzw. bevorzugt größer als 80 mol% und noch bevorzugter im Verhältnis von größer als 90 mol%. Werden die Katalysatorbestandteile aus organischen Lösungsmitteln (z.B. Alkohol, Aceton, THF, Acetonitril, Nitromethan u. a.) direkt ausgefällt, wobei als Fällungsreagenzien sowohl anorganische als auch organische Basen (z.B. NaOH, NH₃, NH₄OH, TMEDA, u.a.) herangezogen werden können, erhält man erfindungsgemäß Niederschläge mit Composite-Charakter, welche sowohl hochmolekulare Silikon-Verbindungen, Metall-Hydroxid und Metall-Si-Metallorganyle enthalten. Diese Mischung, welche den festen Niederschlag bildet, garantiert sehr große spezifische Oberflächen (> 20 m²/g) und somit die Nanostruktur dieser Composite-Katalysatoren.

Danach wird das so synthetisierte Katalysatorpulver getrocknet, wobei nicht über 150°C getrocknet werden soll, um Diffusionsvorgänge zwischen den einzelnen Komponenten und Partikeln minimal zu halten, da dies zu unerwünschter Partikelaggregation führen kann, welche wiederum Sintervorgänge zwischen den einzelnen Katalysatorpartikeln unter Arbeitsbedingungen bei hoher Temperatur bedingt. Dies würde zwangsläufig die Aktivität der Katalysatoren in unerwünschter Weise einschränken.

Katalysatoren, welche auf dem hier beschriebenen nasschemischen Weg synthetisiert werden, beinhalten zusätzlich Lösungsmittelmoleküle, welche durch Kalzinieren bei höherer Temperatur entfernt werden. In gewissen Fällen, z.B. bei Katalysatoren mit größerem Inertanteil, ist es von Vorteil, dass bei Temperaturen bis zu 1000°C kalziniert wird. Dieser Prozessschritt bedingt die Ausbildung individueller, kristallographischer Phasen, sowohl der Inertkomponente als auch der katalytisch aktiven Metallkomponente. Ist das Kalzinieren der Pulver angebracht, tritt bei Temperaturen über 150°C ein merklicher Abbau des Hydroxids zum Oxid ein, welcher mit steigender Temperatur fortschreitet. Bei Temperaturen über 350°C ist dieser Vorgang weitgehend abgeschlossen und weitere Veränderungen des Katalysators sind somit Sintereffekten zuzuschreiben. Es ist von Vorteil, das Kalzinieren unter reaktiver Atmosphäre durchzuführen. Durch Auswahl geeigneter Gasatmosphären sind sowohl Oxide, Nitride, Carbide und Mischungen der Anion-Komponenten darstellbar. Setzt man das Pulver nach gewisser Zeit bei einer bestimmten Temperatur einer reduzierenden Atmosphäre aus, bleibt die Inertkomponente von der Reduktion unbeeinträchtigt und nur die Übergangsmetallkomponente wird zum Metall reduziert.

Solche von Fremdkomponenten (z.B. Lösungsmittel, thermisch labile Anionen etc.) befreite Katalysatoren sind auch direkt zugänglich. Dazu werden Ni, Fe oder beliebige Übergangsmetallverbindungen zusammen mit Verbindungen, welche die Inertkomponente oder deren Vorstufe enthalten, bei hoher Temperatur, wobei Temperaturen größer 300°C zu verstehen sind, zusammen in der Gasoder Dampfphase zersetzt. Die Zersetzung kann auch erst an der Wand des beheizten Gefäßes stattfinden. Voraussetzung dabei ist, dass dabei Verbindungen verwendet werden, welche ausreichend flüchtig sind und zumindest kurze Zeit in der Gas- bzw. Dampfphase existieren.

Das erfindungsgemäße Verfahren wird - wie bereits ausgeführt - vorzugsweise zur Herstellung hochwertiger technischer Ruße, Nanoonions, Nanohorns, Nanofibers und/oder Nanotubes, welche an dem Katalysator anhaften, verwendet. Die Nano-Kohlenstoffe stellen dabei ein wertvolles Nebenprodukt der Wasserstoffherstellung dar.

Gemäß einem weiteren Aspekt der vorliegenden Erfindung wird auch eine Vorrichtung zur Herstellung eines wasserstoffhältigen Gasgemisches aus einem geeigneten Feedgas, welche einen Reformer (1) und mindestens einen Sekundärreformer (2) umfasst, zur Verfügung gestellt, wobei der Reformer (1) eine Zufuhrleitung (a) mit einer in sie mündenden Heißdampfleitung (b) und eine Ableitung (c) umfasst, dadurch gekennzeichnet, dass zumindest ein Teil des Feedgases vor Eintritt in den Reformer (1) über eine in Strömungsrichtung vor der Einmündung der Heißdampfleitung (b) liegenden Leitung (d) abgezweigt und mindestens einem Sekundärreformer (2) zugeführt wird, wobei das Feedgas im Sekundärreformer (2) mit einem nanostrukturierten Katalysator kontaktiert wird und die Abgase des Sekundärreformers (2) über eine Leitung (e) entweder mit dem aus dem Reformer austretenden wasserstoffhältigen Gasgemisch in Leitung (f) kombiniert oder über Leitung (g) in den Reformer (1) eingebracht werden.

Vorzugsweise ist im Reformer (1) zusätzlich ein Wärmetauscher (3) angeordnet, welcher gegebenenfalls in die Leitung (g) zugeschaltet werden kann.

Günstig ist ebenfalls, wenn im Reformer (1) zusätzlich ein mit der Heißdampfleitung (b) leitungsmäßig verbundener Wärmetauscher (4) angeordnet ist und und die Abgase des Sekundärreformers (2) über eine Leitung (h) in die Dampfzufuhr (i) des Wärmetauscher (4) eingespeist werden.

Gemäß einer bevorzugten Ausführungsform werden die Abgase des Reformers (1) über die Ableitung (c) in einen Wärmetauscher (5) geführt und der entstehende Dampf in die Dampfzufuhr (i) des Wärmetauscher (4) eingespeist.

Weiters ist günstig, wenn die aus dem Wärmetauscher (5) austretenden Abgase über eine Leitung (j) in einen Verbrennungsreaktor (6) zur Entfernung von Kohlenmonoxid geführt werden.

Gemäß noch einer weiteren bevorzugten Ausführungsform der vorliegenden Erfindung umfasst der Sekundärreformer (2) eine Zuund Abfuhreinrichtung (7) zur kontinuierlichen Ein- und Ausschleusung des nanostrukturierten Katalysators.

Auch wird es bevorzugt, wenn ein Teil des Feedgases über eine Leitung (k) von der Leitung (d) abgezweigt wird und über die Leitung (k) dem Reformer (1) und/oder dem Sekundärreformer (2) als Heizgas zugeführt wird.

Vorzugsweise wird die Abwärme des Reformers zur teilweisen oder gänzlichen Beheizung des Sekundärreformers verwendet. Zu diesem Zweck werden in der Vorrichtung zur Herstellung eines wasserstoffhältigen Gasgemisches nach der vorliegenden Erfindung der Reformer und der Sekundärreformer durch ein Wärmeleitelement verbunden. Der Wärmetransfer wird im Prinzip durch den Temperaturgradienten im Wärmeleitelement geleistet. Vorzugsweise werden der Reformer und der Sekundärreformer in einem Reaktorgehäuse untergebracht, worin der Reformer und der Sekundärreformer durch eine gasundurchdringliche Trennwand, die zusammen mit dem Gehäuse ein Wärmeleitelement darstellt, getrennt sind.

Das erfindungsgemäße Verfahren kann eingesetzt werden, um neben Wasserstoff auch hochwertige technische Ruße, Nanoonions, Nanohorns, Nanofibers und/oder Nanotubes zu produzieren. Die Nanokohlenstoffverbindungen, die sich am Katalysator des Sekundärreformers ablagern, werden unabhängig vom Reformer gebildet. Aus diesem Grund sieht die Erfindung in einem weiteren Aspekt ein Verfahren zur Wasserstoff- und Nanokohlenstoffproduktion zur Verfügung, entkoppelt vom Wasserdampfreformer, vor. Ruß steht im deutschen Sprachgebrauch sowohl für unerwünschte Verbrennungsprodukte ("Schornsteinruß", "Dieselruß, engl. "soot"), die einen wesentlichen Anteil krebserregender polyzyklischer Kohlenwasserstoffe aufweisen, als auch für einen wertvollen industriell hergestellten Ruß, den Industrieruß (engl. "carbon black"), der nicht mit "Schornsteinrußen" verwechselt werden sollte. Großtechnisch hergestellte Industrieruße stellen eine große und divergente Stoffgruppe mit genau spezifizierbaren physikal.-chemischen Eigenschaften dar. Je nach Anwendungsgebiet werden Parameter wie spez. Oberfläche (herkömmlich im Bereich zw. 10-1000 m²/g), Partikeldurchmesser (herkömmlich zw. 5-500 nm), und Struktur und weitere empirische Kenngrößen wie Vulkanisierungsgeschwindigkeit, Iod- oder Dibutylphthalat-Adsorption, Abriebsund Extrusionsverhalten angepasst. Industrieruß bildet einen wertvollen Rohstoff für diverse Anwendungen, beispielsweise als Farbstoff, in der Gummiindustrie, hauptsächlich zur Reifenherstellung, oder der Elektroindustrie, z.B. als Elektrodenmaterial. Herkömmlich wird Industrieruß durch partielle Oxidation bei unvollständiger Verbrennung über 1000 °C von Erdgas oder Erdöl hergestellt, bei der große Mengen CO₂ anfallen. Es wurde nun überraschend festgestellt, dass die Nanokohlenstoffe Industrieruß in seinen Anwendungen teilweise oder vollständig ersetzen können. Die vorliegende Erfindung stellt nun ein Verfahren zur Produktion einer Industrieruß-Alternative bereit, das weitgehend frei von CO₂-Emissionen ist. Im Speziellen sieht die vorliegende Erfindung die Verwendung eines Verfahrens zur Herstellung eines wasserstoffhältigen Gasgemisches aus einem geeigneten kohlenwasserstoffhältigen Feedgas vor, bei dem zumindest ein Teil des Feedgases in einen Sekundärreformer zugeführt wird, wobei das Feedgas im Sekundärreformer mit einem nanostrukturierten Katalysator kontaktiert wird und die im Wesentlichen CO- und CO₂-freien Abgase des Sekundärreformers gegebenenfalls zusätzlich CO₂-reduziert werden, zur Produktion hochwertiger technischer Ruße, Nanoonions, Nanohorns, Nanofibers und/oder Nanotubes, welche an dem Katalysator anhaften, und deren Anwendung als Ersatzstoff von Industrieruß. Diese hochwertigen technischen Ruße, Nanoonions, Nanohorns, Nanofibers und/oder Nanotubes stellen somit einen Ersatz für Ruß, der industriell mittels partieller Oxidation hergestellt wird, dar. Die Anwendungsgebiete der erfindungsgemäß produzierten Nanokohlenstoffe decken sich mit denen von Industrieruß. Nach Bedarf können die Nanokohlenstoffe, analog zu bekannten Methoden der Industrierußverarbeitung, selektiert und verarbeitet werden, um gewünschten Anforderungen zu entsprechen. Der CO₂-Gehalt der Abgase des Sekundärreformers kann bei Bedarf noch zusätzlich reduziert werden, beispielsweise durch die Verwendung eines Molekularsiebs, die Rückleitung von Feedgas in den Sekundärreformer, durch ein Kompressionsverfahren und Abtrennung der Kohlenwasserstoffe oder durch Einleitung in den Wasserdampfreformer.

Die Vorteile der obgenannten Ausführungsformen der Vorrichtung gemäß der vorliegenden Erfindung ergeben sich aus den zugehörigen obgenannten bevorzugten Ausgestaltungen des erfindungsgemäßen Verfahrens.

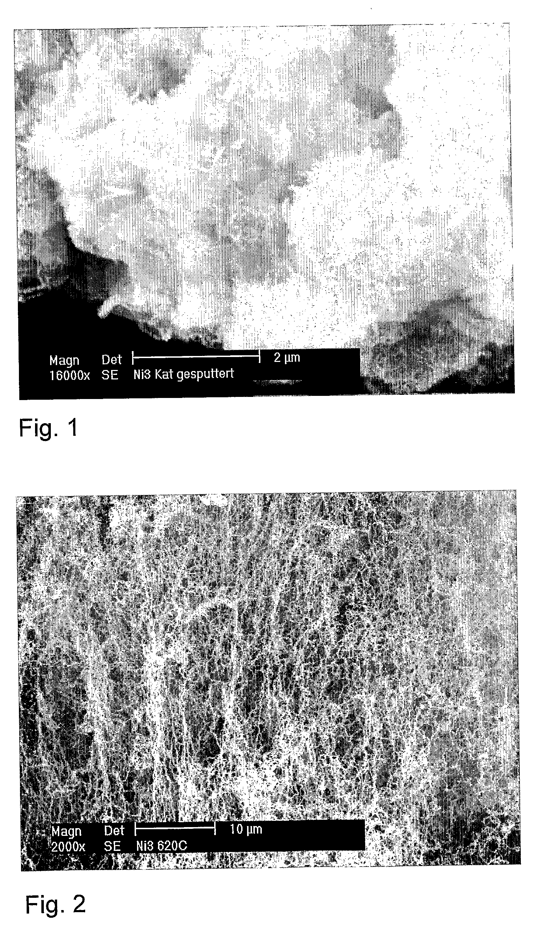

Die vorliegende Erfindung wird nun anhand eines Ausführungsbeispiels unter Bezugnahme auf die Figuren 1 und 2 in den beiliegenden Zeichnungen näher erläutert:

### Beispiel 1

Ni(OH)₂ wurde durch Ammoniakfällung bei pH 9 aus einer wässrigen Lösung von Nickelnitrat hergestellt.

Der Niederschlag wurde in einem Büchnertrichter gesammelt, gründlich mit entionisiertem Wasser, gefolgt von Aceton gewaschen und bei 100°C während mehrerer Stunden getrocknet. 4,5g des derart hergestellten Ni(OH)₂-Pulvers wurden in 100 ml Aceton unter heftigem Rühren suspendiert und darauf mit 2 ml TEOS (Tetraethoxysilan), 5 ml Wasser und 2 ml Ammoniumhydroxid (25%) versetzt. Die Suspension wurde über Nacht mechanisch gerührt, sodass sichergestellt war, dass praktisch alles TEOS als SiO₂ homogen auf dem Ni(OH)₂ Niederschlag aufgebracht war. Der feste Rückstand wurde abfiltriert, wie oben gewaschen und bei 120°C während mehrerer Stunden getrocknet. Fig. 1 stellt eine SEM-Aufnahme des derart hergestellten Composite-Katalysators dar.

### Beispiel 2

200 mg des Composite-Katalysators wurden in ein Keramikschiffchen geladen, welches in einen Rohrofen mit einer Heißzone von 30 cm, ausgerüstet mit einem Quarzrohr von 40 mm Durchmesser und 1000 mm Länge, geschoben wurde. Das Quarzrohr wurde an beiden Enden mit geeigneten Verschlüssen, welche Gaszufuhr und Gasauslass aufwiesen, verschlossen. Das gesamte System wurde mit reinem Methan gespült. Nach Start des Aufheizens auf CVD-Reaktionstemperatur von 620°C wurde ein Methan-Gasfluss von 90 ml/min eingestellt. Die Aufheizrate betrug 10°C pro Minute und eine konstante Temperatur von 620°C wurde über 4 Stunden aufrecht gehalten. Bei Erreichen einer Temperatur von 350°C wurde im Abgas ein Ansteigen des Wasserstoffgehalts beobachtet. Nach 20 Minuten und Erreichen der Reaktionstemperatur wurde eine Wasserstoffkonzentration im Abgas von 68 Vol.% gemessen. Während der vierstündigen Versuchsdauer fiel die Wasserstoffkonzentration kontinuierlich ab, war am Ende aber noch immer bei 51 Vol.%. Nach Abkühlen auf Raumtemperatur wurden dem Reaktor 3,87 g Kohlenstoffnanofasern entnommen. Fig. 2 zeigt diese Kohlenstoffnanofasern, welche hohe Graphitstruktur und einen durchschnittlichen Durchmesser von 50 bis 70 nm aufweisen.

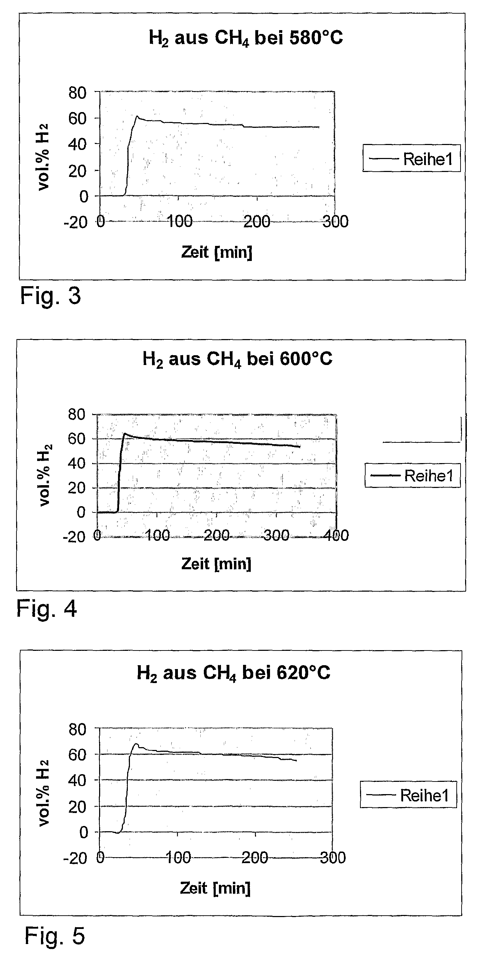

In den beiliegenden Figuren 3 bis 5 sind die gemessenen Wasserstoffkonzentrationen im Abgas des in Beispiel 2 beschriebenen erfindungsgemäßen Sekundärreformers über einen bestimmten Zeitraum graphisch dargestellt. Aus allen drei Figuren ist ersichtlich, dass über den gesamten Versuchszeitraum eine praktisch unverändert hohe und stabile Wasserstoffkonzentration im Abgas erzielt werden konnte, was auf eine besonders hohe Aktivität des eingesetzten Ni-Composite-Katalysators, hergestellt wie zuvor beschrieben, schließen lässt.

Die Messung der Wasserstoffkonzentration im Abgas eines erfindungsgemäßen Sekundärreformers wurde mit einem Gerät der Fa. Siemens (DE), Calomat 6, durchgeführt. Anhand der aus den Messungen gewonnenen Daten kann zu jedem Zeitpunkt der Reaktion Rückschluss auf die Aktivität des Katalysators gezogen werden. Dadurch ist es weiters möglich, durch Vorsehen eines Wasserstoffsensors im Abgasstrom des Sekundärreformers und Online-Auswertung der gewonnenen Wasserstoffkonzentrationsdaten bei einer vorhandenen Zu- und Abfuhreinrichtung zur kontinuierlichen Einund Ausschleusung des Katalysators die Einschleusung frischen, unverbrauchten Katalysators sowie die Ausschleusung von mit Nano-Kohlenstoff bedeckten verbrauchten Katalysators automatisiert ablaufen zu lassen.

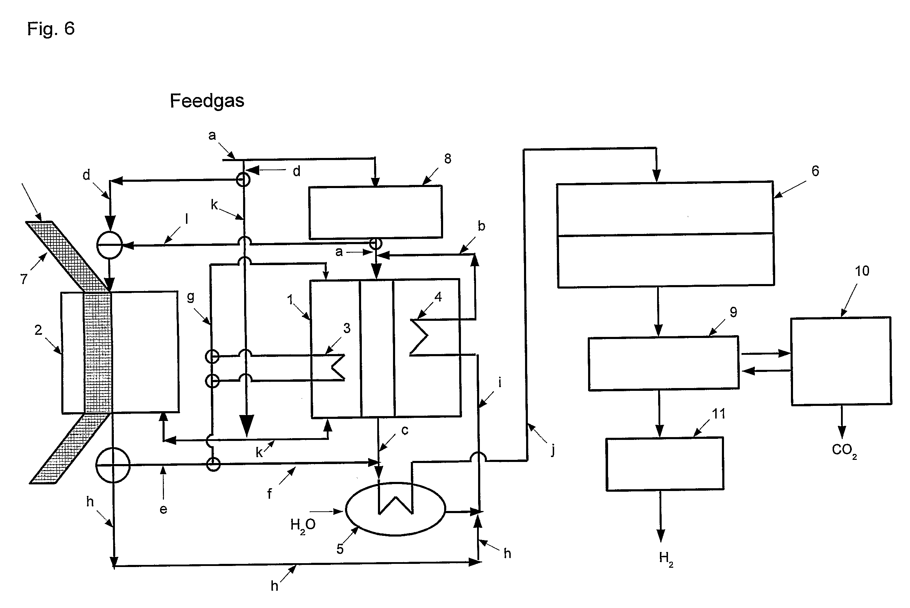

Die Vorrichtung gemäß der vorliegenden Erfindung wird nun unter Bezugnahme auf Figur 6 näher erläutert. Darin wird schematisch eine besonders bevorzugte Ausführungsform der Vorrichtung gemäß der vorliegenden Erfindung gezeigt, welche einen Reformer (1) mit einer Zufuhrleitung (a), einer in sie mündenden Heißdampfleitung (b) und eine Ableitung (c) umfasst. Vor Eintritt in den Reformer (1) wird ein Teil des kohlenwasserstoffhältigen Feedgases aus der Zufuhrleitung (a) entweder vor Eintritt in eine Entschwefelungsanlage (8) oder danach - in Abhängigkeit von der Reinheit des Feedgases bzw. der gewählten Reaktionstemperatur und Katalysatorart - über die in Strömungsrichtung vor der Einmündung der Heißdampfleitung (b) liegenden Leitungen (d) bzw. (l) abgezweigt und in einen Sekundärreformer (2) eingebracht. Ein weiterer Teil des Feedgases kann über eine Leitung (k) von der Leitung (d) abgezweigt und über die Leitung (k) dem Reformer (1) und/oder dem Sekundärreformer (2) als Heizgas zugeführt werden. In der vorliegenden Ausführungsform ist nur ein Sekundärreformer (2) vorgesehen, alternativ können ebenso mehrere Sekundärreformer parallel geschaltet werden. Dieser Sekundärreformer (2) ist ein "trockener" Reformer, d.h. er wird im Gegensatz zum Reformer (1) nicht mit Wasserdampf beaufschlagt. Der Sekundärreformer (2) weist eine Zu- und Abfuhreinrichtung (7) zur kontinuierlichen Ein- und Ausschleusung des nanostrukturierten Katalysators auf. Im Sekundärreformer (2) wird das abgezweigte Feedgas mit dem nanostrukturierten Katalysator kontaktiert, die dabei entstehenden Abgase (hauptsächlich Wasserstoff und nicht umgesetztes Feedgas) werden dann über eine Leitung (e) entweder über eine Leitung (f) mit dem über die Ableitung (c) aus dem Reformer austretenden wasserstoffhältigen Abgasgemisch kombiniert oder, falls erforderlich, über Leitung (g) in den Reformer (1) zur weiteren Feedgasspaltung mittels Wasserdampf in Gegenwart z.B. eines Nickelkatalysators eingebracht. Weiters ist im Reformer (1) zusätzlich ein Wärmetauscher (3) angeordnet, welcher gegebenenfalls in die Leitung (g) zugeschaltet werden kann. Im Reformer (1) ist zusätzlich ein mit der Heißdampfleitung (b) leitungsmäßig verbundener Wärmetauscher (4) zum Temperaturabgleich angeordnet, in den die Abgase des Sekundärreformers (2) über eine Leitung (h) in die Dampfzufuhr (i) des Wärmetauschers (4) eingespeist werden können. Die Abgase des Reformers (1) werden über die Ableitung (c) in einen Wärmetauscher (5) geführt, der entstehende Dampf wird in die Dampfzufuhr (i) des Wärmetauschers (4) eingespeist. Die aus dem Wärmetauscher (5) austretenden Abgase, welche entweder nur aus den Abgasen des Reformers (1) oder aus den kombinierten Abgasen des Reformers (1) und des Sekundärreformers (2) bestehen, werden dann über eine Leitung (j) in einen Verbrennungsreaktor (6) zur Entfernung von Kohlenmonoxid geführt. Dieser Verbrennungsreaktor (6) ist hier als zweistufiger Shift-Reaktor ausgeführt, mit einem nachgeschaltetem CO₂-Wäscher (9). Mit dem CO₂-Wäscher (9) ist ein CO₂-Stripper (10) leitungsmäßig verbunden. An den CO₂-Wäscher (9) wiederum ist ein Methanator (11) zur Endreinigung des produzierten Wasserstoffs angeschlossen. Alternativ kann auch in Anhängigkeit der Qualität des im Sekundärreformer (2) gebildeten Abgases dieses direkt in den CO₂-Wäscher (9) bzw. in den Methanator (11) eingespeist werden (nicht gezeigt).

## Patentansprüche

1. Verfahren zur Herstellung eines wasserstoffhältigen Gasgemisches aus einem geeigneten kohlenwasserstoffhältigen Feedgas in einem Reformer, **dadurch gekennzeichnet, dass** zumindest ein Teil des Feedgases vor Eintritt in den Reformer abgezweigt und mindestens einem Sekundärreformer zugeführt wird, wobei das Feedgas im Sekundärreformer mit einem nanostrukturierten Katalysator kontaktiert wird und die im Wesentlichen CO- und CO₂-freien Abgase des Sekundärreformers entweder mit dem aus dem Reformer austretenden wasserstoffhältigen Gasgemisch kombiniert oder in den Reformer eingebracht werden.

2. Verfahren nach Anspruch 1, **dadurch gekennzeichnet, dass** die Abgase des Sekundärreformers vor Eintritt in den Reformer vorgewärmt werden.

3. Verfahren nach einem der Ansprüche 1 oder 2, **dadurch gekennzeichnet, dass** die Abgase des Reformers zur Entfernung von Kohlenmonoxid nachverbrannt werden.

4. Verfahren nach Anspruch 3, **dadurch gekennzeichnet, dass** die Abgase des Sekundärreformers mit dem aus dem Reformer austretenden wasserstoffhältigen Gasgemisch kombiniert und vor der Nachverbrennung abgekühlt werden.

5. Verfahren nach einem der Ansprüche 1 bis 4, **dadurch gekennzeichnet, dass** der nanostrukturierte Katalysator auf einem Träger angeordnet ist.

6. Verfahren nach Anspruch 5, **dadurch gekennzeichnet, dass** der Träger ein flächiger Träger ist.

7. Verfahren nach Anspruch 5, **dadurch gekennzeichnet, dass** der Träger partikelförmige keramische Körper oder partikelförmige Glaskörper umfasst.

8. Verfahren nach einem der Ansprüche 1 bis 7, **dadurch gekennzeichnet, dass** im Sekundärreformer der nanostrukturierte Katalysator kontinuierlich ein- und ausgeschleust wird, gegebenenfalls in Abhängigkeit des Wasserstoffgehalts im Abgas.

9. Verfahren nach Anspruch 8, **dadurch gekennzeichnet, dass** der nanostrukturierte Katalysator und das Feedgas im Sekundärreformer im Gleichstrom geführt werden.

10. Verfahren nach Anspruch 8, **dadurch gekennzeichnet, dass** der nanostrukturierte Katalysator und das Feedgas im Sekundärreformer im Gegenstrom geführt werden.

11. Verfahren nach einem der Ansprüche 1 bis 10, **dadurch gekennzeichnet, dass** das Feedgas im Sekundärreformer bei einer Temperatur im Bereich von 300°C bis 1400°C mit dem nanostrukturierten Katalysator kontaktiert wird.

12. Verfahren nach Anspruch 11, **dadurch gekennzeichnet, dass** das Feedgas im Sekundärreformer bei einer Temperatur im Bereich von 400°C bis 700°C mit dem nanostrukturierten Katalysator kontaktiert wird.

13. Verfahren nach einem der Ansprüche 1 bis 12, **dadurch gekennzeichnet, dass** der Katalysator ausgewählt ist aus der Gruppe bestehend aus Gruppe VIII-Übergangselementen.

14. Verfahren nach Anspruch 13, **dadurch gekennzeichnet, dass** der Katalysator ein Composite-Katalysator umfassend ein Mitglied ausgewählt aus der Gruppe bestehend aus Erdalkalimetalloxiden, Silizium, Siliziumoxid und Mischungen hiervon ist.

15. Verfahren nach Anspruch 13 oder 14, **dadurch gekennzeichnet, dass** als Katalysator Nickel und/oder Eisen zum Einsatz kommen.

16. Verfahren nach einem der Ansprüche 1 bis 15, **dadurch gekennzeichnet, dass** der Katalysator im Sekundärreformer kontinuierlich oder diskontinuierlich ausgeschleust und von anhaftenden Kohlenstoffverbindungen abgetrennt wird.

17. Verfahren nach Anspruch 16, **dadurch gekennzeichnet, dass** der Katalysator mechanisch von anhaftenden Kohlenstoffverbindungen abgetrennt wird, vorzugsweise durch Abschaben oder in einem Zyklon.

18. Verfahren nach Anspruch 16, **dadurch gekennzeichnet, dass** der Katalysator chemisch von anhaftenden Kohlenstoffverbindungen abgetrennt wird, vorzugsweise durch ein Ätzverfahren.

19. Verfahren nach Anspruch 16, **dadurch gekennzeichnet, dass** der Katalysator physikalisch von anhaftenden Kohlenstoffverbindungen abgetrennt wird, vorzugsweise durch Hochtemperaturbehandlung, Abheizen, Induktiv, durch RF oder HF.

20. Verfahren nach einem der Ansprüche 1 bis 19, **dadurch gekennzeichnet, dass** als Feedgas Erdgas zum Einsatz kommt.

21. Verfahren nach einem der Ansprüche 1 bis 19, **dadurch gekennzeichnet, dass** als Feedgas ein gegebenenfalls vorgereinigtes Biogas zum Einsatz kommt.

22. Verfahren nach einem der Ansprüche 1 bis 21, **dadurch gekennzeichnet, dass** ein Teil des Feedgases als Heizgas zum Beheizen des Reformers und/oder Sekundärreformers verwendet wird.

23. Verfahren nach einem der Ansprüche 1 bis 22, **dadurch gekennzeichnet, dass** der Sekundärreaktor durch die Abwärme des Reformers zumindest teilweise beheizt wird.

24. Verwendung eines Verfahren nach einem der Ansprüche 1 bis 23 zur Herstellung hochwertiger technischer Ruße, Nanoonions, Nanohorns, Nanofibers und/oder Nanotubes, welche an dem Katalysator anhaften.

25. Vorrichtung zur Herstellung eines wasserstoffhältigen Gasgemisches aus einem geeigneten Feedgas, welche einen Reformer (1) und mindestens einen Sekundärreformer (2) umfasst, durch Anwendung eines Verfahrens nach einem der Ansprüche 1 bis 24, wobei der Reformer (1) eine Zufuhrleitung (a) mit einer in sie mündenden Heißdampfleitung (b) und eine Ableitung (c) umfasst, **dadurch gekennzeichnet, dass** von der Zuführleitung (a) vor Eintritt in den Reformer (1) und vor der Einmündung der Heißdampfleitung (b) eine Leitung (d) abzweigt, welche zum Zuführen von zumindest einem Teil des Feedgases in den mindestens einen Sekundärreformer (2) geeignet ist, wobei im Sekundärreformer (2) ein nanostrukturierten Katalysator zur Kontaktierung des Feedgases vorliegt und vom Sekundärreformer (2) eine Leitung (e) zum Ableiten der Abgase entweder mit einer Leitung (f) zum Führen von aus dem Reformer austretenden wasserstoffhältigen Gasgemisch kombiniert oder über eine Leitung (g) in den Reformer (1) führt.

26. Vorrichtung nach Anspruch 25, **dadurch gekennzeichnet, dass** im Reformer (1) zusätzlich ein erster Wärmetauscher (3) angeordnet ist, welcher gegebenenfalls in die Leitung (g) zum Ableiten der Abgase vom Sekundärreformer (2) in den Reformer (1) zugeschaltet werden kann.

27. Vorrichtung nach einem der Ansprüche 25 oder 26, **dadurch gekennzeichnet, dass** im Reformer (1) zusätzlich ein mit der Heißdampfleitung (b) leitungsmäßig verbundener zweiter Wärmetauscher (4) angeordnet ist und eine Leitung (h) zum Einspeisen der Abgase des Sekundärreformers (2) in eine Dampfzufuhr (i) des zweiten Wärmetauschers (4) vorgesehen ist.

28. Vorrichtung nach Anspruch 27, **dadurch gekennzeichnet, dass** die Ableitung (c) in einen dritten Wärmetauscher (5) führt und die Dampfzufuhr (i) zur Einspeisung des entstehenden Dampfs in den zweiten Wärmetauscher (4) angeordnet ist.

29. Vorrichtung nach Anspruch 28, **dadurch gekennzeichnet, dass** eine Leitung (j) zur Führung der aus dem dritten Wärmetauscher (5) austretenden Abgase in einen Verbrennungsreaktor (6) zur Entfernung von Kohlenmonoxid angeordnet ist.

30. Vorrichtung nach einem der Ansprüche 25 bis 29, **dadurch gekennzeichnet, dass** der Sekundärreformer (2) eine Zu- und Abfuhreinrichtung (7) zur kontinuierlichen Ein- und Ausschleusung des nanostrukturierten Katalysators umfasst.

31. Vorrichtung nach einem der Ansprüche 25 bis 30, **dadurch gekennzeichnet, dass** eine Leitung (k) zur Abzweigung eines Teils des Feedgases von der Leitung (d), welche vor Eintritt in den Reformer (1) und vor der Einmündung der Heißdampfleitung (b) von der Zuführleitung (a) abzweigt, vorgesehen ist und die Leitung (k) zur Führung von Feedgas als Heizgas in den Reformer (1) und/oder den Sekundärreformer (2)geeignet ist.

32. Vorrichtung nach einem der Ansprüche 25 bis 31, **dadurch gekennzeichnet, dass** der Reformer (1) und der Sekundärreformer (2) durch ein Wärmeleitelement verbunden sind.

## Claims

1. Method for producing a hydrogen-containing gas mixture from a suitable hydrocarbon-containing feed gas in a reformer, **characterized in that** at least a portion of the feed gas is diverted before it enters the reformer and is supplied to at least one secondary reformer, wherein the feed gas is brought into contact with a nanostructured catalyst in the secondary reformer and the substantially CO and CO₂-free exhaust gases of the secondary reformer are either combined with the hydrogen-containing gas mixture which escapes the reformer or are introduced into the reformer.

2. Method according to claim 1, **characterized in that** the exhaust gases of the secondary reformer are pre-heated before they enter the reformer.

3. Method according to any one of claism 1 or 2, **characterized in that** the exhaust gases of the reformer are post-combusted for removing carbon monoxide.

4. Method according to claim 3, **characterized in that** the exhaust gases of the secondary reformer are combined with the hydrogen-containing gas mixture which escapes the reformer and cooled down prior to the post-combustion.

5. Method according to any one of claims 1 to 4, **characterized in that** the nanostructured catalyst is arranged on a carrier.

6. Method according to claim 5, **characterized in that** the carrier is a two-dimensional carrier.

7. Method according to claim 5, **characterized in that** the carrier comprises particulate ceramic bodies or particulate glass bodies.

8. Method according to any one of claims 1 to 7, **characterized in that** in the secondary reformer, the nanostructured catalyst is continuously fed in and fed out, optionally as a function of the hydrogen content in the exhaust gas.

9. Method according to claim 8, **characterized in that** the nanostructured catalyst and the feed gas in the secondary reformer are guided in co-current flow.

10. Method according to claim 8, **characterized in that** the nanostructured catalyst and the feed gas in the secondary reformer are guided in counter-current flow.

11. Method according to any one of claims 1 to 10, **characterized in that** the feed gas in the secondary reformer is brought into contact with the nanostructured catalyst at a temperature in the range of from 300°C to 1400°C.

12. Method according to claim 11, **characterized in that** the feed gas in the secondary reformer is brought into contact with the nanostructured catalyst at a temperature in the range of from 400°C to 700°C.

13. Method according to any one of claims 1 to 12, **characterized in that** the catalyst is selected from the group consisting of group VIII transition elements.

14. Method according to claim 13, **characterized in that** the catalyst is a composite catalyst which comprises a member selected from the group consisting of alkalineearth metal oxides, silicon, silicon oxide, and mixtures thereof.

15. Method according to claim 13 or 14, **characterized in that** nickel and/or iron is/are used as catalyst.

16. Method according to any one of claims 1 to 15, **characterized in that** the catalyst in the secondary reformer is continuously or discontinuously fed out and separated from adhering carbon compounds.

17. Method according to claim 16, **characterized in that** the catalyst is mechanically separated from adhering carbon compounds, preferably by scraping off or in a cyclone.

18. Method according to claim 16, **characterized in that** the catalyst is chemically separated from adhering carbon compounds, preferably by an etching process.

19. Method according to claim 16, **characterized in that** the catalyst is physically separated from adhering carbon compounds, preferably by high-temperature treatment, baking out, inductively, by RF or HF.

20. Method according to one of claims 1 to 19, **characterized in that** natural gas is used as feed gas.

21. Method according to one of claims 1 to 19, **characterized in that** an optionally pre-purified biogas is used as feed gas.

22. Method according to any one of claims 1 to 21, **characterized in that** a portion of the feed gas is used as heating gas for heating the reformer and/or secondary reformer.

23. Method according to any one of claims 1 to 22, **characterized in that** the secondary reactor is at least partially heated by the waste heat of the reformer.

24. Use of a method according to any one of claims 1 to 23 for producing high-quality technical soots, nano-onions, nano-horns, nanofibers and/or nanotubes which adhere to the catalyst.

25. Device for producing a hydrogen-containing gas mixture from a suitable feed gas which comprises a reformer (1), and at least one secondary reformer (2), employing a method according to any one of claims 1 to 24, wherein the reformer (1) comprises a supply line (a) with a superheated steam line (b) joining said supply line, and a discharge line (c), **characterized in that** a line (d) branches off the supply line (a) before it enters the reformer (1) and upstream of the junction of the superheated steam line (b), which is suitable for supplying at least a portion of the feed gas into the at least one secondary reformer (2), wherein a nanostructured catalyst is present in the secondary reformer (2) for contacting with the feed gas and from the secondary reformer (2) a line (e) for discharging the exhaust gases either joins with a line (f) for guiding a hydrogen-containing gas mixture which escapes the reformer or feeds into the reformer (1) via a line (g).

26. Device according to claim 25, **characterized in that** a first heat exchanger (3) is additionally arranged in the reformer (1), which exchanger can optionally be connected into the line (g) for discharging the exhaust gases from the secondary reformer (2) into the reformer (1).

27. Device according to any one of claims 25 or 26, **characterized in that** a second heat exchanger (4) connected with the superheated steam line (b) via a line is additionally arranged in the reformer (1), and a line (h) is provided to feed the exhaust gases from the secondary reformer (2) into a steam supply (i) for the second heat exchanger (4).

28. Device according to claim 27, **characterized in that** the discharge line (c) feeds into a third heat exchanger (5) and the steam line (i) for supplying the arising steam is disposed in the second heat exchanger (4).

29. Device according to claim 28, **characterized in that** a line (j) is provided to feed the exhaust gases escaping the third heat exchanger (5) into a combustion reactor (6) for removing carbon monoxide.

30. Device according to any one of claims 25 to 29, **characterized in that** the secondary reformer (2) comprises a supply and discharge arrangement (7) for continuous feed in and feed out of the nanostructured catalyst.

31. Device according to any one of claims 25 to 30, **characterized in that** a line (k) is provided for diverting a portion of the feed gas from the line (d) which branches off the supply line (a) before it enters the reformer (1) and upstream of the junction of the superheated steam line (b), and the line (k) is suitable for supplying feed gas to the reformer (1) and/or to the secondary reformer (2) as heating gas.

32. Device according to any one of claims 25 to 31, **characterized in that** the reformer (1) and the secondary reformer (2) are connected by a heat-conducting element.

## Revendications

1. Procédé pour fabriquer dans un reformeur un mélange de gaz contenant de l'hydrogène à partir d'un gaz d'alimentation approprié contenant des hydrocarbures, **caractérisé en ce qu'**au moins une partie du gaz d'alimentation est déviée avant l'entrée dans le reformeur et est amenée à au moins un reformeur secondaire, dans lequel le gaz d'alimentation est mis en contact, dans le reformeur secondaire, avec un catalyseur nanostructuré et les gaz d'échappement, sensiblement dépourvus de CO et de CO₂, du reformeur secondaire sont soit combinés au mélange de gaz contenant de l'hydrogène sortant du reformeur soit sont introduits dans le reformeur.

2. Procédé selon la revendication 1, **caractérisé en ce que** les gaz d'échappement du reformeur secondaire sont chauffés au préalable avant l'entrée dans le reformeur.

3. Procédé selon l'une quelconque des revendications 1 ou 2, **caractérisé en ce que** les gaz d'échappement du reformeur sont incinérés ultérieurement pour éliminer le monoxyde de carbone.

4. Procédé selon la revendication 3, **caractérisé en ce que** les gaz d'échappement du reformeur secondaire sont combinés au mélange de gaz contenant de l'hydrogène sortant du reformeur et sont refroidis avant l'incinération ultérieure.

5. Procédé selon l'une quelconque des revendications 1 à 4, **caractérisé en ce que** le catalyseur nanostructuré est disposé sur un support.

6. Procédé selon la revendication 5, **caractérisé en ce que** le support est un support plat.

7. Procédé selon la revendication 5, **caractérisé en ce que** le support comprend des corps en céramique de forme particulaire ou des corps en verre de forme particulaire.

8. Procédé selon l'une quelconque des revendications 1 à 7, **caractérisé en ce que** le catalyseur nanostructuré est introduit ou évacué en continu dans le reformeur secondaire, éventuellement en fonction de la teneur en hydrogène dans les gaz d'échappement.

9. Procédé selon la revendication 8, **caractérisé en ce que** le catalyseur nanostructuré et le gaz d'alimentation sont guidés dans le flux dans le même sens dans le reformeur secondaire.

10. Procédé selon la revendication 8, **caractérisé en ce que** le catalyseur nanostructuré et le gaz d'alimentation sont guidés en contre-flux dans le reformeur secondaire.

11. Procédé selon l'une quelconque des revendications 1 à 10, **caractérisé en ce que** le gaz d'alimentation dans le reformeur secondaire est mis en contact avec le catalyseur nanostructuré à une température située dans la plage allant de 300 °C à 1 400 °C.

12. Procédé selon la revendication 11, **caractérisé en ce que** le gaz d'alimentation dans le reformeur secondaire est mis en contact avec le catalyseur nanostructuré à une température située dans la plage allant de 400 °C à 700 °C.

13. Procédé selon l'une quelconque des revendications 1 à 12, **caractérisé en ce que** le catalyseur est choisi parmi le groupe constitué du groupe des éléments de transition VIII.

14. Procédé selon la revendication 13, **caractérisé en ce que** le catalyseur est un catalyseur composite comprenant un membre choisi dans le groupe constitué des oxydes de métal alcalino-terreux, de silicium, d'oxyde de silicium et des mélanges de ces derniers.

15. Procédé selon la revendication 13 ou 14, **caractérisé en ce que** sont utilisés en tant que catalyseur le nickel et/ou le fer.

16. Procédé selon l'une quelconque des revendications 1 à 15, **caractérisé en ce que** le catalyseur dans le reformeur secondaire est évacué en continu ou de manière discontinue et est séparé de composés carbonés adhérents.

17. Procédé selon la revendication 16, **caractérisé en ce que** le catalyseur est séparé de manière mécanique des composés carbonés adhérents, de préférence par raclage ou dans un cyclone.

18. Procédé selon la revendication 16, **caractérisé en ce que** le catalyseur est séparé de manière chimique des composés carbonés adhérents, de préférence par un procédé de décapage.

19. Procédé selon la revendication 16, **caractérisé en ce que** le catalyseur est séparé de manière physique des composés carbonés adhérents, de préférence par un traitement à haute température, par arrêt du chauffage, par induction, par RF ou par HF.

20. Procédé selon l'une quelconque des revendications 1 à 19, **caractérisé en ce que** du gaz naturel est utilisé en tant que gaz d'alimentation.

21. Procédé selon l'une quelconque des revendications 1 à 19, **caractérisé en ce qu'**un biogaz éventuellement purifié au préalable est utilisé en tant que gaz d'alimentation.

22. Procédé selon l'une quelconque des revendications 1 à 21, **caractérisé en ce qu'**une partie du gaz d'alimentation est utilisée en tant que gaz de chauffage pour chauffer le reformeur et/ou le reformeur secondaire.

23. Procédé selon l'une quelconque des revendications 1 à 22, **caractérisé en ce que** le réacteur secondaire est chauffé au moins en partie par la chaleur perdue du reformeur.

24. Utilisation d'un procédé selon l'une quelconque des revendications 1 à 23 pour fabriquer de la suie, des nano-oignons, des nano-cornets, des nanofibres et/ou des nanotubes de haute qualité technique, qui adhèrent au catalyseur.

25. Dispositif pour fabriquer un mélange de gaz contenant de l'hydrogène à partir d'un gaz d'alimentation approprié, lequel dispositif comprend un reformeur (1) et au moins un reformeur secondaire (2), en appliquant un procédé selon l'une quelconque des revendications 1 à 24, dans lequel le reformeur (1) comprend un conduit d'amenée (a) pourvu d'un conduit de vapeur chaude (b) débouchant dans ce dernier et un conduit d'évacuation (c), **caractérisé en ce qu'**un conduit (d) forme une déviation depuis le conduit d'amenée (a) avant l'entrée dans le reformeur (1) et avant l'embouchure du conduit de vapeur chaude (b), lequel conduit est approprié pour amener au moins une partie du gaz d'alimentation dans l'au moins un reformeur secondaire (2), dans lequel un catalyseur nanostructuré pour établir un contact avec le gaz d'alimentation est présent dans le reformeur secondaire (2) et dans le reformeur secondaire (2), un conduit (e) pour dévier les gaz d'échappement soit en combinaison avec un conduit (f) pour guider un mélange de gaz contenant de l'hydrogène sortant du reformeur soit par l'intermédiaire d'un conduit (g) mène dans le reformeur (1).

26. Dispositif selon la revendication 25, **caractérisé en ce qu'**en supplément un premier échangeur de chaleur (3) est disposé dans le reformeur (1), lequel échangeur de chaleur peut être activé éventuellement dans le conduit (g) pour dévier les gaz d'échappement du reformeur secondaire (2) dans le reformeur (1).

27. Dispositif selon l'une quelconque des revendications 25 ou 26, **caractérisé en ce qu'**est disposé en supplément dans le reformeur (1) un deuxième échangeur de chaleur (4) relié par un conduit au conduit de vapeur très chaude (b), et **en ce qu'**un conduit (h) pour injecter les gaz d'échappement du reformeur secondaire (2) dans une arrivée de vapeur (i) du deuxième échangeur de chaleur (4) est prévu.

28. Dispositif selon la revendication 27, **caractérisé en ce que** le conduit d'évacuation (c) mène dans un troisième échangeur de chaleur (5), et **en ce que** l'arrivée de vapeur (i) pour l'injection de la vapeur formée est disposée dans le deuxième échangeur de chaleur (4).

29. Dispositif selon la revendication 28, **caractérisé en ce qu'**un conduit (j) pour guider les gaz d'échappement sortant du troisième échangeur de chaleur (5) est disposé dans un réacteur à combustion (6) pour supprimer le monoxyde de carbone.

30. Dispositif selon l'une quelconque des revendications 25 à 29, **caractérisé en ce que** le reformeur secondaire (2) comprend un système d'arrivée et d'évacuation (7) pour introduire et à évacuer en continu le catalyseur nanostructuré.

31. Dispositif selon l'une quelconque des revendications 25 à 30, **caractérisé en ce qu'**un conduit (k) pour dévier une partie du gaz d'alimentation du conduit (d) qui forme une déviation depuis le conduit d'amenée (a) avant l'entrée dans le reformeur (1) et avant l'embouchure du conduit de vapeur chaude (b) est prévu, et ce que le conduit (k) est approprié pour guider le gaz d'alimentation en tant que gaz de chauffage dans le reformeur (1) et/ou dans le reformeur secondaire (2).

32. Dispositif selon l'une quelconque des revendications 25 à 31, **caractérisé en ce que** le reformeur (1) et le reformeur secondaire (2) sont reliés par un élément conducteur de chaleur.
